# EUROPEAN PATENT APPLICATION

(11) **EP 2 843 172 A1**
(43) Date of publication of application: **04.03.2015**
(21) Application number: 14176274.0
(22) Date of filing: 09.07.2014
(51) Int. Cl.: E05F 15/73

(54) **System for controlling power trunk or power tailgate**

(30) Priority: 10.07.2013 KR 20130081129
(71) Applicant: Mototech Co. Ltd, Hwaseong-si, Gyeonggi-do (KR)
(72) Inventor: Jang, Se Yeong, Gyeonggi-do (KR); Park, Jae Young, Gyeonggi-do (KR); An, Jae Hyoung, Gyeonggi-do (KR); Lee, Sang Il, Gyeonggi-do (KR)
(74) Representative: Uno, Jennifer Elizabeth Hayes

(57) **Abstract**

Disclosed is a system for controlling a power trunk or a power tailgate provided in a vehicle. The system includes: a rear sensing device that senses an object approaching a vehicle from a rear side of the vehicle within a predetermined distance; a smart key module (SKM) that recognizes a FOB key in a wireless manner and authenticates whether or not the FOB key is valid for the vehicle; and a power trunk/tailgate control device that receives an object sense signal from the rear sensing device, analyzes the object sense signal to determine whether or not the object makes a predetermined motion, and performs control such that the power trunk or the power tailgate is opened or closed when it is determined that the object makes the predetermined motion, and the smart key module authenticates that the FOB key is valid. Since it is possible to control the open/close operation of the power trunk or the power tailgate using a rear parking sensor, it is possible to improve user's convenience.

## Description

### CROSS REFERENCES TO RELATED APPLICATIONS

The present invention contains subject matter related to Korean Patent Application No. 2013-81129, filed in the Korean Patent Office on July 10, 2013, the entire contents of which are incorporated herein by reference.

### BACKGROUND OF THE INVENTION

### Field of the Invention

The present invention relates to a system for controlling a power trunk or a power tailgate.

### Description of Related Art

In general, a trunk is used to store general luggage, an emergency tool kit, a spare tire, and the like. In some cases, a first-aid kit and the like are stored in the trunk for preparation against an accident. A lid that covers such a trunk room is called a trunk lid.

The trunk lid is locked/unlocked by a trunk locking device, which includes a hinge for allowing the trunk lid to be lifted by even a weak force as the locking device is released. Recently, an automatic power trunk/tailgate open/close system capable of automatically opening or closing the trunk lid just by making a simple switch operation on a driver seat has been developed. A power tailgate control system of the related art will be described below by way of example.

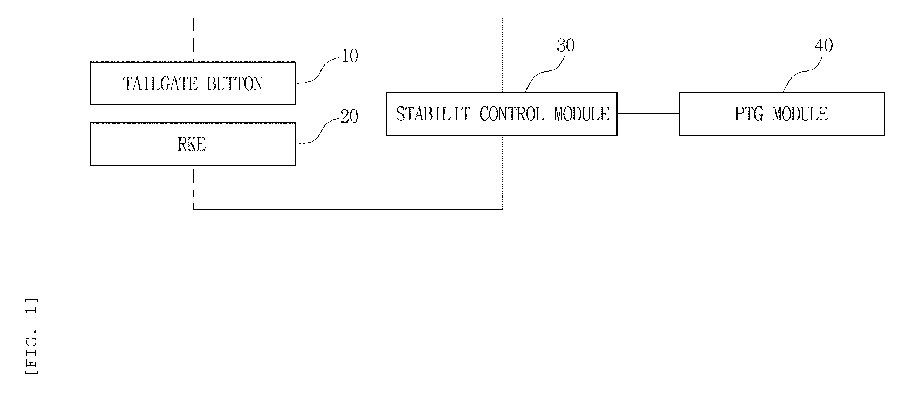

FIG. 1 is a block diagram illustrating a power tailgate control system of the related art.

In the power tailgate control system of the related art, the power tailgate is automatically opened or closed by remotely controlling a tailgate button 10 or a remote keyless entry (RKE) unit 20 positioned outside. In addition, the power tailgate control system of the related art also has a power tailgate lock/unlock functionality.

A stability control module 30 of the power tailgate control system of the related art receives a signal from the tailgate button 10 or the RKE unit 20 and controls the power tailgate module 40. The RKE unit 20 enables a user to remotely open or close the power tailgate by pressing the remote control button without using a separate key to open or close the door of the vehicle.

The power trunk/power tailgate system of the related art is a convenient system that enables a user to remotely control an open/close operation of a trunk or a tailgate by pressing a trunk/tailgate button or a switch installed inside a vehicle or manipulating an RKE unit in a remote distance. However, while a user holds up luggage, or user's hands are busy, a user is necessary to take down the luggage and press a button to open the trunk/tailgate. From a user's viewpoint, such a cumbersome process degrades convenience. Since the trunk/tailgate is usually provided to store luggage, user' s hands are busy in many cases. Therefore, the power trunk/tailgate system of the related art is short of convenience.

### SUMMARY OF THE INVENTION

In view of the aforementioned problems, there is a need for a power trunk/tailgate control system by which user's convenience is improved by allowing a user to control an open/close operation of a power trunk or a power tailgate using a rear parking sensor.

According to an aspect of the invention, there is provided a system for controlling a power trunk or a power tailgate provided in a vehicle, including: a rear sensing device that senses an object approaching a vehicle from a rear side of the vehicle within a predetermined distance; a smart key module (SKM) that recognizes a FOB key in a wireless manner and authenticates whether or not the key fob is valid for the vehicle; and a power trunk/tailgate control device that receives an object sense signal from the rear sensing device, analyzes the object sense signal to determine whether or not the obj ect makes a predetermined motion, and performs control such that the power trunk or the power tailgate is opened or closed when it is determined that the object makes the predetermined motion, and the smart key module authenticates that the FOB key is valid.

In the system for controlling a power trunk or a power tailgate described above, the power trunk/tailgate control device may request authentication to the smart key module when it is determined that the object makes the predetermined motion based on the signal sensed by the rear sensing device, the smart key module may search whether or not there is a valid FOB key and transmit a successful authentication signal to the power trunk/tailgate control device when there is a valid FOB key, and the power trunk/tailgate control device may perform control such that the power trunk or the power tailgate is opened or closed when the successful authentication signal is received from the smart key module.

In the system for controlling a power trunk or a power tailgate described above, the smart key module may periodically search whether or not there is a valid FOB key and transmit a successful authentication signal to the power trunk/tailgate control device when there is a valid FOB key, and the power trunk/tailgate control device may activate the rear sensing device as the successful authentication signal is received from the smart key module and perform control such that the power trunk or the power tailgate is opened or closed when it is determined that an object makes a predetermined motion based on a signal sensed by the rear sensing device.

In the system for controlling a power trunk or a power tailgate described above, the smart key module may search whether or not there is a valid FOB key using a low frequency (LF) band. In the system for controlling a power trunk or a power tailgate described above, the rear sensing device may include a sensor module having at least two sensors positioned in a rear side of a vehicle to sense an object approaching a vehicle within a predetermined distance, and a sensing processing unit that collects signals sensed from the sensors and transmits a result of the sensing to the power trunk/tailgate control device.

In the system for controlling a power trunk or a power tailgate described above, the power trunk/tailgate control device may determine that an object makes a predetermined motion when an object sense signal is input from a single sensor by a predetermined number of times within a predetermined time period.

In the system for controlling a power trunk or a power tailgate described above, the power trunk/tailgate control device may determine that an object makes a predetermined motion when object sense signals are input from a pair of neighboring sensors by a predetermined number of times within a predetermined time period.

In the system for controlling a power trunk or a power tailgate described above, the power trunk/tailgate control device may determine that an object makes a predetermined motion when object sense signals are sequentially input from a pair of neighboring sensors within a predetermined time period.

In the system for controlling a power trunk or a power tailgate described above, the power trunk/tailgate control device may determine that an object makes a predetermined motion when object sense signals are sequentially input from a pair of neighboring sensors by a predetermined number of times within a predetermined time period.

In the system for controlling a power trunk or a power tailgate described above, the sensor may be an ultrasonic sensor. In the system for controlling a power trunk or a power tailgate described above, the power trunk/tailgate control device may include a motor that transmits power to the power trunk or the power tailgate to perform an open/close operation, and a controller that receives an object sense signal from the rear sensing device, analyze the object sense signal to determine whether or not an object makes a predetermined, and control the motor such that the power trunk or the power tailgate is opened or closed when it is determined that the object makes the predetermined motion, and the smart key module authenticates that the FOB key is valid.

According to the present invention, it is possible to improve user's convenience by controlling an open/close operation of a power trunk or a power tailgate using a rear parking sensor.

According to the present invention, since an existing rear parking sensor is utilized, it is possible to implement a power trunk/tailgate open/close operation without adding a separate sensor or device. In this manner, since no sensor is added according to the present invention, it is possible to reduce a manufacturing cost and remove necessity of modifying a vehicle exterior.

Furthermore, since no sensor is added according to the present invention, it is possible to reduce an erroneous operation caused by interference between sensors and further reduce electromagnetic noise.

### BRIEF DESCRIPTION OF THE DRAWINGS

The foregoing and additional features and characteristics of this disclosure will become more apparent from the following detailed description considered with reference to the accompanying drawings, wherein:
FIG. 1 is a block diagram illustrating a power tailgate control system of the related art;
FIG. 2 is a block diagram illustrating a power trunk/tailgate control system; and
FIG. 3 is a block diagram illustrating a power trunk/tailgate control system according to an embodiment of the present invention.

### DETAILED DESCRIPTION OF THE INVENTION

Hereinafter, embodiments of the invention will be described in detail with reference to the accompanying drawings. It is noted that like reference numerals denote like elements throughout overall drawings. In addition, descriptions of well-known apparatus and methods may be omitted so as to not obscure the description of the representative embodiments, and such methods and apparatus are clearly within the scope and spirit of the present disclosure.

The terminology used herein is only for the purpose of describing particular embodiments and is not intended to limit the invention. As used herein, the singular forms "a", "an" and "the" may be intended to include the plural forms as well, unless the context clearly indicates otherwise. It is further to be noted that, as used herein, the terms "comprises", "comprising", "include", and "including" indicate the presence of stated features, integers, steps, operations, units, and/or components, but do not preclude the presence or addition of one or more other features, integers, steps, operations, units, and/or components, and/or combination thereof.

The present invention relates to a power trunk/tailgate control system provided in a vehicle.

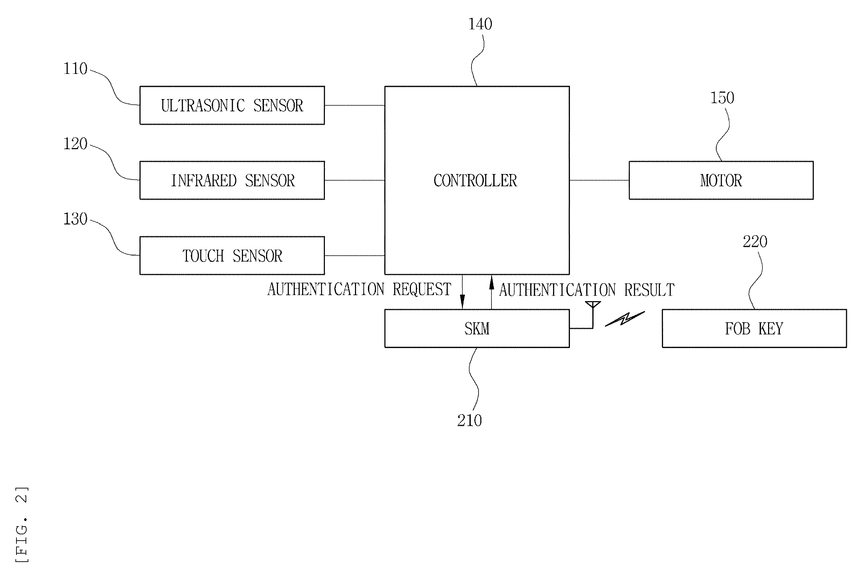

FIG. 2 is a block diagram illustrating a power trunk/tailgate control system.

Referring to FIG. 2, the power trunk/tailgate control system according to the present invention includes an ultrasonic sensor 110, an infrared sensor 120, a touch sensor 130, acontroller 140, a motor 150, and a smart key module 210.

The ultrasonic sensor 110 is positioned in a rear face of a vehicle to sense a user' s motion. The ultrasonic sensor is a sensor using a characteristic of an ultrasonic wave having a frequency range of approximately 20 kHz or higher at which humans cannot hear it. The ultrasonic wave may propagate through a liquid or solid body. Since it has a high frequency range and a short wavelength, it can be applied to measurement with a high resolution.

The infrared sensor 120 is positioned over the ultrasonic sensor 110 to sense a user's motion. The touch sensor 130 is positioned in a rear face of a vehicle to sense a touch. The motor 150 supplies power for driving a power trunk or a power tailgate. The controller 140 receives a signal from the touch sensor 130 and controls the motor 150 to open the power trunk or the power tailgate.

As signals are sequentially input to the ultrasonic sensor 110 and the infrared sensor 120 in this order, the controller 140 controls the motor 150 to open the power trunk or the power tailgate.

As signals are sequentially input to the infrared sensor 120 and the ultrasonic sensor 110 in this order, the controller 140 controls the motor 150 to close the power trunk or the power tailgate.

The smart key module (SKM) 210 identifies a FOB key 220 in a wireless manner and authenticates whether or not the FOB key 220 has a smart key matching a corresponding vehicle.

In FIG. 2, as a valid input signal is transmitted from the ultrasonic sensor 110, the infrared sensor 120, or the touch sensor 130, the controller 140 requests authentication to the SKM 210. The SKM 210 sends an authentication response to the controller 140 based on a result of the authentication. The controller 140 that receives an authentication response controls the motor 150 to open or close the power trunk or the power tailgate. In this case, the controller 140 does not open or close the power trunk or the power tailgate if the authentication response from the SKM 210 is unsuccessful even when there is a valid input from the ultrasonic sensor 110 or the infrared sensor 120.

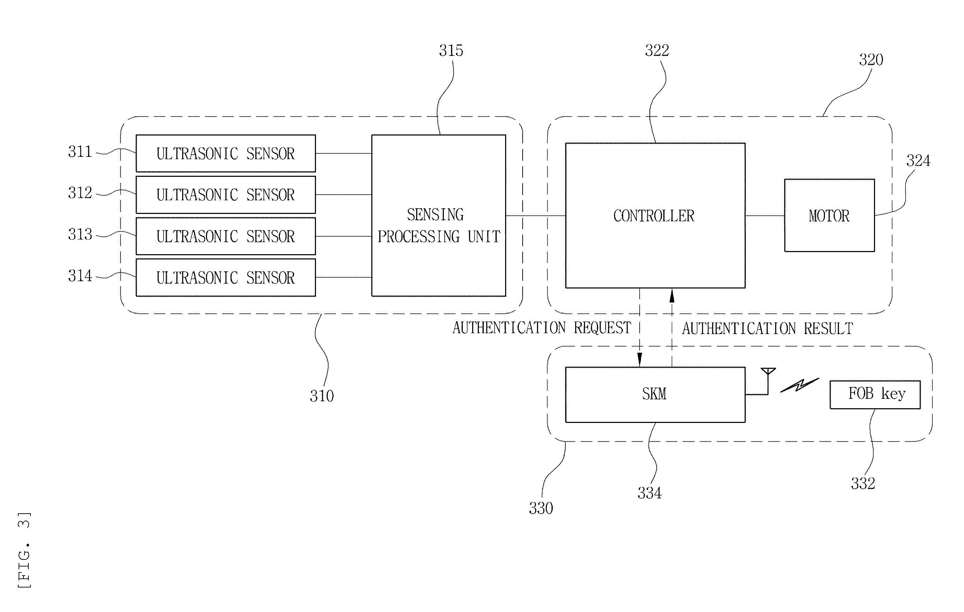

FIG. 3 is a block diagram illustrating a power trunk/tailgate control system according to an embodiment of the present invention.

Referring to FIG. 3, the power trunk/tailgate control system according to the present invention includes a rear sensing device 310, a power trunk/tailgate control device 320, and a SKM unit 330.

The SKM unit 330 includes a FOB key 332 and a smart key module (SKM) 334.

The rear sensing device (or parking aid system (PAS)) 310 senses an object approaching a vehicle from a rear side within a certain distance.

The SKM 334 recognizes the FOB key 332 in a wireless manner and authenticates whether or not the FOB key 332 is valid for a corresponding vehicle.

As an object sense signal is received from the rear sensing device 310, the power trunk/tailgate control device 320 analyzes the object sense signal to determine whether or not the object makes a predetermined motion. If it is determined that the object makes the predetermined motion, and the SKM 334 authenticates that the FOB key is valid, the power trunk/tailgate control device 320 controls the motor such that the power trunk or the power tailgate is opened or closed.

The power trunk/tailgate control device 320 according to the present invention includes a motor 324 and a controller 322. The motor 324 transmits power to the power trunk or the power tailgate to perform an open/close operation. As an object sense signal is received from the rear sensing device 310, the controller 322 analyzes the object sense signal to determine whether or not the obj ect makes a predetermined motion. If it is determined that the obj ect makes the predetermined mot ion, and the SKM 334 authenticates that the FOB key 332 is valid, the controller 322 controls the motor 324 such that the power trunk or the power tailgate is opened or closed.

A method of controlling the open/close operation of the power trunk or the power tailgate can be classified into two types.

A first type of the control method will be described.

First, if it is determined that an object makes a predetermined motion based on the signal sensed by the rear sensing device 310, the power trunk/tailgate control device 320 requests authentication to the SKM 334.

Then, the SKM 334 searches whether or not there is a valid FOB key. If there is a valid FOB key, the SKM 334 transmits a successful authentication signal to the power trunk/tailgate control device 320.

As the successful authentication signal is received from the SKM 334, the power trunk/tailgate control device 320 performs control such that the power trunk or the power tailgate is opened or closed.

Next, a second type of the control method will be described.

First, the SKM 334 periodically searches a valid FOB key 332. If there is a valid FOB key 332, the SKM 334 transmits a successful authentication signal to the power trunk/tailgate control device 320.

Then, as the successful authentication signal is received from the SKM 334, the power trunk/tailgate control device 320 activates the rear sensing device 310. If it is determined that an object makes a predetermined motion based on a signal sensed by the rear sensing device 310, the power trunk/tailgate control device 320 performs control such that the power trunk or the power tailgate is opened or closed.

According to an embodiment of the present invention, the SKM 334 may determine whether or not there is a valid FOB key by searching a signal using a low frequency (LF) band.

The LF band is a frequency band higher than that of a very low frequency (VLF) band in a radio frequency spectrum. The LF band has an ITU radio band number of "5," a frequency range of 30 to 300 kHz, and a wavelength of 1 to 10 km.

The rear sensing device 310 according to the present invention includes a sensor module having at least two sensors positioned in a rear side of a vehicle to sense an object approaching the vehicle within a predetermined distance and a sensing processing unit 315 for collecting any signal sensed from the sensors and transmitting a result of the sensing to the power trunk/tailgate control device 320.

For example, the sensor module according to an embodiment of the present invention may include an ultrasonic sensor. The sensor module according to an embodiment illustrated in FIG. 3 has, for example, four ultrasonic sensors 311 to 314.

The ultrasonic sensor is a sensor using a characteristic of an ultrasonic wave having a high frequency range (approximately 20 kHz or higher) at which humans cannot hear it. The ultrasonic wave may propagate through a liquid or solid body. Since it has a high frequency range and a short wavelength, it can be applied to measurement with a high resolution.

A description will now be made for a method of recognizing a predetermined motion based on the object sense signal received from a plurality of sensors according to the present invention.

The power trunk/tailgate control device 320 may determine that an object makes a predetermined motion when the object sense signal is input from a single sensor by a predetermined number of times within a predetermined time period. For example, the power trunk/tailgate control device 320 may determine that an obj ect makes a predetermined motion when an obj ect sense signal is input from a single ultrasonic sensor 311 by two or three times within 3 seconds.

Alternatively, the power trunk/tailgate control device 320 may determine that an object makes a predetermined motion when the object sense signals are input from a pair of neighboring sensors by a predetermined number of times within a predetermined time period. For example, the power trunk/tailgate control device 320 may determine that an object makes a predetermined motion when object sense signals are input from a pair of neighboring ultrasonic sensors 312 and 313 by two or three times within three seconds.

Alternatively, the power trunk/tailgate control device 320 may determine that an object makes a predetermined motion when object sense signals are sequentially input from a pair of neighboring sensors within a predetermined time period. For example, the power trunk/tailgate control device 320 may determine that an obj ect makes a predetermined motion when obj ect sense signals are sequentially input from a pair of neighboring ultrasonic sensors 312 and 313 within three seconds.

Alternatively, the power trunk/tailgate control device 320 may determine that an object makes a predetermined motion when object sense signals are sequentially input from a pair of neighboring sensors by a predetermined number of times within a predetermined time period. For example, the power trunk/tailgate control device 320 may determine that an object makes a predetermined motion when the object sense signals are sequentially input from a pair of neighboring ultrasonic sensors 312 and 313 by two or three times within three seconds.

Although exemplary embodiments of the present invention have been shown and described, it will be apparent to those having ordinary skill in the art that a number of changes, modifications, or alterations to the invention as described herein may be made, none of which depart from the spirit of the present invention. All such changes, modifications and alterations should therefore be seen as within the scope of the present invention.

## Claims

1. A system for controlling a power trunk or a power tailgate provided in a vehicle, comprising:
a rear sensing device that senses an object approaching a vehicle from a rear side of the vehicle within a predetermined distance;
a smart key module (SKM) that recognizes a FOB key in a wireless manner and authenticates whether or not the FOB key is valid for the vehicle; and
a power trunk/tailgate control device that receives an object sense signal from the rear sensing device, analyzes the object sense signal to determine whether or not the object makes a predetermined motion, and performs control such that the power trunk or the power tailgate is opened or closed when it is determined that the object makes the predetermined motion, and the smart key module authenticates that the FOB key is valid.

2. The system according to claim 1, wherein the power trunk/tailgate control device requests authentication to the smart key module when it is determined that the object makes the predetermined motion based on the signal sensed by the rear sensing device,
the smart key module searches whether or not there is a valid FOB key and transmits a successful authentication signal to the power trunk/tailgate control device when there is a valid FOB key, and
the power trunk/tailgate control device performs control such that the power trunk or the power tailgate is opened or closed when the successful authentication signal is received from the smart key module.

3. The system according to claim 1, wherein the smart keymodule periodically searches whether or not there is a valid FOB key and transmits a successful authentication signal to the power trunk/tailgate control device when there is a valid FOB key, and
the power trunk/tailgate control device activates the rear sensing device as the successful authentication signal is received from the smart key module and performs control such that the power trunk or the power tailgate is opened or closed when it is determined that an object makes a predetermined motion based on a signal sensed by the rear sensing device.

4. The system according to claim 2 or 3, wherein the smart key module searches whether or not there is a valid FOB key using a low frequency (LF) band.

5. The system according to claim 1, wherein the rear sensing device includes
a sensor module having at least two sensors positioned in a rear side of a vehicle to sense an object approaching a vehicle within a predetermined distance, and
a sensing processing unit that collects signals sensed from the sensors and transmits a result of the sensing to the power trunk/tailgate control device.

6. The system according to claim 5, wherein the power trunk/tailgate control device determines that an object makes a predetermined motion when an object sense signal is input from a single sensor by a predetermined number of times within a predetermined time period.

7. The system according to claim 5, wherein the power trunk/tailgate control device determines that an object makes a predetermined motion when object sense signals are input from a pair of neighboring sensors by a predetermined number of times within a predetermined time period.

8. The system according to claim 5, wherein the power trunk/tailgate control device determines that an object makes a predetermined motion when object sense signals are sequentially input from a pair of neighboring sensors within a predetermined time period.

9. The system according to claim 5, wherein the power trunk/tailgate control device determines that an object makes a predetermined motion when object sense signals are sequentially input from a pair of neighboring sensors by a predetermined number of times within a predetermined time period.

10. The system according to claim 5, wherein the sensor is an ultrasonic sensor.

11. The system according to claim 1, wherein the power trunk/tailgate control device includes
a motor that transmits power to the power trunk or the power tailgate to perform an open/close operation, and
a controller that receives an object sense signal from the rear sensing device, analyzes the object sense signal to determine whether or not an object makes a predetermined, and controls the motor such that the power trunk or the power tailgate is opened or closed when it is determined that the object makes the predetermined motion, and the smart key module authenticates that the FOB key is valid.
